(19) Europäisches Patentamt
European Patent Office
Office européen des brevets

(11) **EP 4 105 243 A1**

(12) **EUROPEAN PATENT APPLICATION**
published in accordance with Art. 153(4) EPC

(43) Date of publication:
**21.12.2022 Bulletin 2022/51**

(21) Application number: **21785561.8**

(22) Date of filing: **07.04.2021**

(51) International Patent Classification (IPC):
**C08F 8/12** (2006.01)      **C08F 290/06** (2006.01)
**C08F 2/20** (2006.01)

(52) Cooperative Patent Classification (CPC):
**C08F 2/20; C08F 8/12; C08F 290/06**

(86) International application number:
**PCT/JP2021/014828**

(87) International publication number:
**WO 2021/206128 (14.10.2021 Gazette 2021/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **07.04.2020 JP 2020068818**

(71) Applicant: **Denka Company Limited
Tokyo 103-8338 (JP)**

(72) Inventor: **WATANABE,Wataru
Tokyo 103-8338 (JP)**

(74) Representative: **Yeadon IP Limited
Nexus
Discovery Way
Leeds LS2 3AA (GB)**

(54) **MODIFIED VINYL ALCOHOL POLYMER, DISPERSION STABILIZER FOR SUSPENSION POLYMERIZATION, AND METHOD FOR POLYMERIZING VINYL COMPOUND**

(57) A modified vinyl alcohol-based polymer having a hydrodynamic radius (Rh) (unit: nm) satisfying a formula (1) with respect to a viscosity average degree of polymerization x.

$$0.186x^{0.542} \times 1.30 \geq Rh \geq 0.186x^{0.542} \times 1.06 \qquad (1)$$

FIG. 1

**Description**

**FIELD OF THE INVENTION**

The present invention relates to a modified vinyl alcohol-based polymer, a dispersion stabilizer for suspension polymerization, and a method for polymerizing a vinyl-based compound. The dispersion stabilizer for suspension polymerization is particularly related to a dispersion stabilizer for suspension polymerization suitable for suspension polymerization of vinyl-based compounds, particularly vinyl chloride.

**BACKGROUND OF THE INVENTION**

In the case of suspension polymerization of vinyl-based compounds such as a vinyl-based compound or a mixture of a vinyl-based compound and a monomer copolymerizable therewith, a dispersion stabilizer such as polyvinyl alcohol and methylol cellulose is used. Among these, polyvinyl alcohol (PVA) has excellent properties and is generally used. As dispersion stabilizers for suspension polymerization of vinyl-based compounds, for example, there is proposed a modified PVA in which an unsaturated double bond is introduced by introducing an aldehyde-derived carbonyl group at the end of a vinyl alcohol-based polymer and undergoing a dehydration reaction or deacetic acid reaction during saponification (see, for example, Patent Literature 1), and a modified PVA having a specific oxyalkylene group in the side chain (see, for example, Patent Literature 2 and 3).

**PRIOR ART**

Patent Literature

[Patent Literature 1] Japanese Patent Application Publication No. H08-208724

[Patent Literature 2] WO 2010/113569

[Patent Literature 3] WO 2013/115239

**SUMMARY OF THE INVENTION**

The modified PVAs obtained by these methods cannot sufficiently cope with suspension polymerization in various types of polymerization cans such as large polymerization cans used in recent years. That is, it cannot be said that a satisfactory performance is not necessarily obtained, regarding the obtained polymer of vinyl-based compound, for the requirements that: (1) there should be a small amount of coarse particles in the resin particles; (2) resin particles having a particle size as uniform as possible should be obtained; (3) a resin having high porosity should be obtained, so that the monomer components can be easily removed and the resin has high absorbability of plasticizers. However, it is hard to say that satisfactory performance is always obtained.
Therefore, an object of the present invention is to provide a dispersion stabilizer for suspension polymerization that can obtain resin particles with uniform particle size, a small amount of coarse particles, high porosity, and high plasticizer absorption when suspension polymerization of vinyl-based compounds such as vinyl chloride is performed.
As a result of intensive research to solve the above problems, the present inventor has found that, it is effective to use a modified vinyl alcohol-based polymer having a hydrodynamic radius (Rh) (unit: nm) satisfying the formula (1) with respect to the viscosity average degree of polymerization (x) as a dispersion stabilizer for suspension polymerization of a vinyl-based compound. Therefore, in one aspect, the present invention provides a modified vinyl alcohol-based polymer satisfying the formula (1).

$$0.186x^{0.542} \times 1.30 \geq Rh \geq 0.186x^{0.542} \times 1.06 \quad (1)$$

In one embodiment, the modified vinyl alcohol-based polymer according to the present invention has a degree of saponification of 65 mol% or more and 99.9 mol% or less.
In another embodiment, the modified vinyl alcohol-based polymer according to the present invention comprises a hydrophilic unit in the side chain.
In yet another embodiment of the modified vinyl alcohol-based polymer according to the present invention, the hydrophilic unit is a polyethylene oxide group.

Another aspect of the present invention provides a dispersion stabilizer for suspension polymerization comprising the modified vinyl alcohol-based polymer according to the present invention.

A further aspect of the present invention provides a method for polymerizing a vinyl-based compound, comprising dispersing a vinyl-based compound, or a mixture of a vinyl-based compound and a monomer copolymerizable therewith in water, with the dispersion stabilizer for suspension polymerization according to the present invention, to perform suspension polymerization.

According to the present invention, there is provided a dispersion stabilizer for suspension polymerization that provides resin particles with uniform particle size, a small amount of coarse particles, high porosity, and high plasticizer absorption when suspension polymerization of a vinyl-based compound such as vinyl chloride is performed. As a result, the dispersion stabilizer for suspension polymerization of the present invention can have the required performance which was difficult for prior arts to achieve.

## BRIEF DESCRIPTION OF THE DRAWINGS

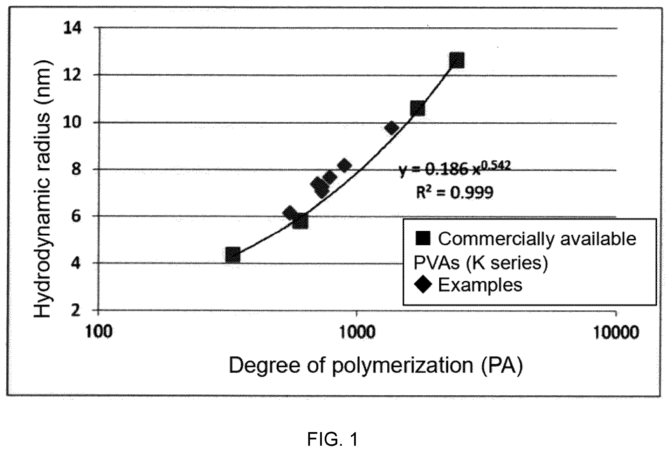

FIG. 1 is a graph in which a hydrodynamic radius (Rh) (logarithmic scale) and a viscosity average degree of polymerization (x) are plotted for commercially available vinyl alcohol-based polymers having different degrees of polymerization and the modified vinyl alcohol-based polymers according to the working examples of the present invention.

## DETAILED DESCRIPTION OF THE INVENTION

The modified vinyl alcohol-based polymer has a hydrodynamic radius (Rh) (unit: nm) with respect to the viscosity average degree of polymerization (x) satisfying the formula (1). A dispersion stabilizer for suspension polymerization containing such a modified vinyl alcohol-based polymer suppresses the formation of coarse particles, and particles having high particle size uniformity can be obtained. Moreover, polymer particles having high porosity can be obtained.

$$0.186x^{0.542} \times 1.30 \geq Rh \geq 0.186x^{0.542} \times 1.06 \quad (1)$$

The significance of the formula (1) will be described with reference to FIG. 1. FIG. 1 is a graph in which the viscosity average degree of polymerization (x) is plotted on the horizontal axis and the hydrodynamic radius (Rh) is plotted on the vertical axis, for the commercially available vinyl alcohol-based polymers having different degrees of polymerization ("K-03", "K-05", "K-17C", "K-24E" manufactured by Denka Corporation) and the modified vinyl alcohol-based polymers according to the working examples of the present invention. As shown in FIG. 1, the hydrodynamic radius (Rh) of a commercially available vinyl alcohol-based polymers are represented by an exponential function of the viscosity average degree of polymerization (x) as shown in the formula (2).

$$0.186x^{0.542} = Rh \quad (2)$$

When polymerization is performed using stabilizers for suspension polymerization in the same amount of addition, from the viewpoint that many molecules can function, it is preferable that the viscosity average degree of polymerization (x) of the vinyl alcohol-based polymer be small. On the other hand, from the viewpoint of protective colloidal properties, it is preferable that the vinyl alcohol-based polymer have a large hydrodynamic radius (Rh) in terms of inhibiting the coalescence of particles. However, for general-purpose vinyl alcohol-based polymers that have not been particularly modified, the hydrodynamic radius (Rh) is plotted on the exponential function of the viscosity average degree of polymerization (x), as shown in FIG. 1, and accordingly, it was not easy to increase the hydrodynamic radius while lowering the viscosity average degree of polymerization. As a result of the study by the present inventor, it has become possible to obtain a vinyl alcohol-based polymer having a low viscosity average degree of polymerization and a large hydrodynamic radius. For example, these properties of vinyl alcohol-based polymers can be adjusted by adjusting the reaction conditions for copolymerizing a monomer having a hydrophilic unit in the side chain with a vinyl ester-based monomer such as vinyl acetate or the like.

The viscosity average degree of polymerization and the hydrodynamic radius of Examples 1 to 7 described later were also measured and plotted in FIG. 1. As shown in FIG. 1, regarding the modified vinyl alcohol-based polymers according to the present invention, they were plotted above the curve represented by the above formula (2). Therefore, the ranges of the viscosity average degree of polymerization (x) and the hydrodynamic radius (Rh) of the modified vinyl alcohol-based polymer of the present invention are defined by the formula (1).

$$0.186x^{0.542} \times 1.30 \geq Rh \geq 0.186x^{0.542} \times 1.06 \quad (1)$$

When Rh / $0.186x^{0.542}$ is less than 1.06 in the above formula (1), the dispersion stabilizer for suspension polymerization is inferior in particle size controllability. Therefore, the value of Rh / $0.186x^{0.542}$ is preferably 1.06 or more, and more preferably 1.08 or more. On the other hand, those having Rh / $0.186x^{0.542}$ exceeding 1.30 are difficult to manufacture.

In one embodiment, the range of the viscosity average degree of polymerization (x) and the hydrodynamic radius (Rh) of the modified vinyl alcohol-based polymer of the present invention is represented by the formula (3).

$$0.186x^{0.542} \times 1.20 \geq Rh \geq 0.186x^{0.542} \times 1.06 \quad (3)$$

In another embodiment, the range of the viscosity average degree of polymerization (x) and the hydrodynamic radius (Rh) of the modified vinyl alcohol-based polymer of the present invention is represented by the formula (4).

$$0.186x^{0.542} \times 1.15 \geq Rh \geq 0.186x^{0.542} \times 1.06 \quad (4)$$

In the present invention, the method for satisfying the general formula (1) is not particularly limited, but it is convenient and preferable to introduce a hydrophilic unit into the side chain of a polyvinyl alcohol. The method is not particularly limited, but a method of reacting polyvinyl alcohol with a compound having a hydrophilic unit to bind the compound, a method of graft-polymerizing a compound having a hydrophilic unit with polyvinyl alcohol, a method of graft-polymerizing a vinyl ester-based monomer such as vinyl acetate with polyvinyl alcohol, followed by saponification, a method of saponifying a polyvinyl ester copolymerized with a macromonomer such as a reactive surfactant having a hydrophilic unit, and the like can be adopted. Among them, from the viewpoint of short steps and economy, a method of saponifying polyvinyl acetate copolymerized with a macromonomer such as a reactive surfactant having a hydrophilic unit is convenient and preferable.

The polymerization method adopted for carrying out these polymerizations may be any of batch polymerization, semi-batch polymerization, continuous polymerization and semi-continuous polymerization. As the polymerization method, any method can be adopted from known methods such as bulk polymerization, solution polymerization, suspension polymerization and emulsion polymerization. Among them, solution polymerization and bulk polymerization, in which polymerization is carried out in the presence of alcohol-based solvent or without using solvent, are preferably adopted rather than suspension polymerization and emulsion polymerization, which require to control the polymerized particle size because the modifying species used often have water solubility and surface activity that affect the polymerized particle size. As the alcohol-based solvent used for solution polymerization, methanol, ethanol, isopropanol and the like can be used, but the alcohol solvent is not limited thereto. Further, these solvents may be used alone, or two or more kinds of these solvents may be used in combination.

The polymerization initiator for radical polymerization of the vinyl ester-based monomer is not particularly limited, but azo compounds such as azobisisobutyronitrile, azobis-2,4-dimethylvaleronitrile, azobis (4-methoxy-2,4-dimethylvaleronitrile), azobisdimethylvaleronitrile, azobismethoxyvaleronitrile; peroxides such as acetyl peroxide, benzoyl peroxide, lauroyl peroxide, acetylcyclohexylsulfonyl peroxide, 2,4,4-trimethylpentyl-2-peroxyphenoxyacetate; percarbonate compounds such as diisopropylperoxydicarbonate, di-2-ethylhexyl peroxydicarbonate, diethoxyethylperoxydicarbonate; and perester compounds such as t-butylperoxyneodecanoate and α-cumylperoxyneodecanoate, and the like can be used in one type, or two or more types in combination.

Further, when the copolymerization is carried out at a high temperature, coloration of PVA or the like due to decomposition of the vinyl ester-based monomer may be observed. In that case, for the purpose of preventing coloration, it is permissible to add an antioxidant such as citric acid to the polymerization system at about 1 ppm or more and 100 ppm or less (relative to the mass of the vinyl ester-based monomer).

The saponification method for producing the modified vinyl alcohol-based polymer according to the present invention is not particularly limited, and it is preferable that the polymer obtained by the above-mentioned method is used with alcohol that can also be used as solvent according to a conventional method. Examples of the alcohol include methanol, ethanol, butanol and the like. The concentration of the polymer in the alcohol can be selected from the range of 20 to 50% by mass. As the alkali catalyst, an alkali metal hydroxide such as sodium hydroxide, potassium hydroxide, sodium methylate, sodium ethylate, potassium methylate or the like, or an alkali catalyst such as alcoholate can be used. As the acid catalyst, an aqueous solution of inorganic acid such as hydrochloric acid or sulfuric acid, or an organic acid such as p-toluenesulfonic acid can be used. The usage of these catalysts needs to be 1 to 100 mmol equivalent with respect to the vinyl ester-based monomer. In such a case, the saponification temperature is not particularly limited, but is usually in the range of 10 to 70 °C, preferably selected from the range of 30 to 50 °C. The reaction is usually carried out over 0.5 to 3 hours.

As examples of vinyl ester-based monomers, in addition to vinyl acetate, vinyl formate, vinyl propionate, vinyl valerate, vinyl caprate, vinyl laurate, vinyl stearate, vinyl benzoate, vinyl pivalate and vinyl versatic acid and the like can be mentioned.

The degree of saponification of the modified vinyl alcohol-based polymer is preferably 65 mol% or more, more preferably 68 mol% or more, and even more preferably 70 mol% or more, in order to make it more water-soluble and easier to handle. In addition, the degree of saponification of the modified vinyl alcohol-based polymer is preferably 99.9 mol% or less, more preferably 99 mol% or less, even more preferably 90 mol% or less, and even more preferably 80 mol% or less, in order to increase the porosity of the particles obtained by suspension polymerization of vinyl-based compounds and enhance the absorbability of plasticizer.

The saponification degree of the modified vinyl alcohol-based polymer is measured according to JIS K6726: 1994. That is, it can be determined by quantifying the residual acetic acid group (mol%) in the sample with sodium hydroxide and subtracting it from 100.

The modified vinyl alcohol-based polymer preferably has a hydrophilic unit in the side chain. Having a hydrophilic unit in the side chain has the effect of increasing the hydrodynamic radius and improves particle size controllability. The weight average molecular weight of the hydrophilic unit is preferably 400 to 4000. When the weight average molecular weight of the hydrophilic unit of the side chain is less than 400, the effect of increasing the hydrodynamic radius is insufficient, and the particle size controllability may be poor. The weight average molecular weight of the hydrophilic unit of the side chain is preferably 500 or more, more preferably 600 or more. On the other hand, when the weight average molecular weight is more than 4000, the ratio of the polyvinyl alcohol moiety becomes relatively small, and the particle size controllability may be inferior. Therefore, the weight average molecular weight of the hydrophilic unit of the side chain is preferably 3500 or less, and more preferably 3000 or less. The molecular weight of the hydrophilic unit can be determined by gel permeation chromatography. The measurement conditions in Examples are as follows.

Equipment: GPC-101 manufactured by Showa Denko K.K.
Column: OHpack SB-806M HQ x 2 manufactured by Shodex
Guard column: OHpack SB-G x 1 manufactured by Shodex
Measurement temperature: 40 °C
Injection volume: 200 μL
Injection concentration: 0.25%
Mobile phase: 0.1M-NaNO$_3$ solution (water / methanol = 70/30 vol%)
Mobile phase flow rate: 1 mL/min

Examples of the hydrophilic unit include a polyethylene oxide group, an ethenol group, a saccharide such as cellulose, an acrylic acid group, a carboxyl group, a pyrrolidone group, an acrylate group, an acrylamide group and the like.

The hydrophilic unit of the modified vinyl alcohol-based polymer is preferably a polyethylene oxide group. As an unsaturated monomer that induces a polyethylene oxide group, mention can be made to polyoxyalkylene alkenyl ether, polyoxyalkylene mono (meth) allyl ether, polyoxyalkylene monovinyl ether, and the like, and specifically, polyoxybutylene polyoxyethylene alkenyl ether, polyoxypropylene polyoxyethylene alkenyl ether, polyoxybutylene alkenyl ether, polyoxybutylene polyoxypropylene alkenyl ether, polyoxypropylene alkenyl ether, polyoxypropylene oxyethylene alkenyl ether, polyoxybutylene polyoxyethylene monoallyl ether, polyoxypropylene polyoxyethylene monoallyl ether, polyoxybutylene monoallyl ether, polyoxybutylene polyoxypropylene monoallyl ether, polyoxypropylene monoallyl ether, polyoxypropylene oxyethylene monoallyl ether, polyoxybutylene polyoxyethylene monovinyl ether, polyoxypropylene polyoxyethylene monovinyl ether, polyoxybutylene monovinyl ether, polyoxybutylene polyoxypropylene monovinyl ether, polyoxypropylene monovinyl ether, polyoxypropylene oxyethylene monovinyl ether, polyethylene glycol-polypropylene glycol-allyl ether, polyoxyethylene-alkylallyl ether, polyethylene glycol-allyl ether, and the like can be mentioned.

The modified vinyl alcohol-based polymer preferably has a modification rate of 0.01 mol% or more and 1 mol% or less, depending on the type of modifying group. When the modification rate is 1 mol% or less, the dispersive power is strong and the protective colloidal property is also exhibited, so that it can be suitably used as a dispersion stabilizer for suspension polymerization. The modification rate is more preferably 0.2 mol% or less, even more preferably 0.15 mol% or less. On the other hand, when the modification rate is 0.01 mol% or more, the required characteristics as a dispersion stabilizer for suspension polymerization are sufficiently exhibited. The modification rate is more preferably 0.05 mol% or more, even more preferably 0.1 mol% or more.

The modification rate of the modified vinyl alcohol-based polymer is the mole fraction of the hydrophilic group having the above-mentioned hydrophilic unit with respect to all the monomer units constituting the molecular chain of the modified vinyl alcohol-based polymer. The modification rate can be determined by proton NMR. Specifically, a modified vinyl alcohol-based polymer is saponified to a degree of saponification of 99.95 mol% or more, and then sufficiently washed with methanol to prepare a sample for analysis. The prepared sample is dissolved in heavy water, and a few drops of an NaOH solution in heavy water is added to adjust the pH to 14, and then the measurement is carried out at 80 °C using proton NMR. When calculating from the oxyethylene moiety, the content is calculated by a conventional method based on the integral value of the peak of 1.2 to 1.8 ppm attributed to the methylene group of the polyvinyl alcohol chain and the integral value of peak of 3.6 to 3.7 ppm attributed to oxyethylene moiety. Specifically, assuming b is the integral value of the methylene group of the polyvinyl alcohol chain, a is the integral value of the oxyethylene moiety, and x is the number of repeating units of the oxyethylene moiety, considering the number of protons (2H for methylene group, and 4H for ethylene group), the modification rate is calculated as {a / (4 x x)} / (b / 2) $\times$ 100 (mol%). For example, when a = 1, x = 1, and b = 100, it is calculated as 0.5 mol%.

The viscosity average degree of polymerization of the modified vinyl alcohol-based polymer is preferably 300 or more, even more preferably 400 or more, and even more preferably 500 or more, in order to enhance the dispersion stability when the vinyl-based compound is suspension-polymerized. In addition, from the viewpoint that many molecules can function when the same amount of dispersion stabilizer for suspension polymerization is added, the viscosity average degree of polymerization of the modified vinyl alcohol-based polymer is preferably 5000 or less, more preferably 4000 or less, even more preferably 3000 or less, even more preferably 2000 or less, and even more preferably 1500 or less.

The viscosity average degree of polymerization is measured according to JIS K6726: 1994. That is, a modified PVA is completely saponified, purified, and then determined from the limiting viscosity [η] measured in water at 30 °C.

The dispersion stabilizer for suspension polymerization may be the above-mentioned modified vinyl alcohol-based polymer alone, and may contain PVA other than the above-mentioned modified vinyl alcohol-based polymer and various other additives as long as the spirit of the present invention is not impaired. Examples of the additive include, for example, polymerization regulators such as aldehydes, halogenated hydrocarbons, mercaptans; polymerization inhibitors such as phenol compounds, sulfur compounds, N-oxide compounds; pH regulators; cross-linking agents; preservatives; fungicides, anti-blocking agents; antifoaming agent, and the like. From the viewpoint of significantly exerting the effect of the present invention, the dispersion stabilizer for suspension polymerization preferably contains 10% by mass or more, more preferably 30% by mass or more, and even more preferably 70% by mass or more of the modified PVA according to the embodiments of the present invention.

The dispersion stabilizer for suspension polymerization can be particularly preferably used for suspension polymerization of vinyl-based compounds. Therefore, according to one embodiment of the present invention, there is provided a method for polymerizing a vinyl-based compound, comprising dispersing a vinyl-based compound, or a mixture of a vinyl-based compound and a monomer copolymerizable therewith in water, to perform suspension polymerization. As a vinyl-based compound, mention can be made to vinyl halides such as vinyl chloride; vinyl esters such as vinyl acetate and vinyl propionate; acrylic acids, methacrylic acids, and esters and salts thereof; maleic acid, fumaric acid, and esters and anhydrides thereof; styrene, acrylonitrile, vinylidene chloride, vinyl ether, and the like. Among these, the dispersion stabilizer for suspension polymerization is particularly preferably used for suspension polymerization of vinyl chloride alone or vinyl chloride with a monomer copolymerizable with vinyl chloride. As a monomer copolymerizable with vinyl-based compound such as vinyl chloride, mention can be made to vinyl esters such as vinyl acetate and vinyl propionate; (meth) acrylic acid esters such as methyl (meth) acrylate and ethyl (meth) acrylate; $\alpha$-olefins such as ethylene and propylene; unsaturated dicarboxylic acids such as maleic anhydride and itaconic acid; acrylonitrile, styrene, vinylidene chloride, vinyl ether, and the like.

The dispersion stabilizer for suspension polymerization is suitable for producing soft vinyl chloride resin in that it produces vinyl chloride resin particles having excellent plasticizer absorbability, and it can also be applied to the production of rigid vinyl chloride resin because it is excellent in monomer removal property and particle size distribution. The dispersion stabilizer for suspension polymerization can be used alone or in combination with other stabilizers such as cellulosic derivatives and surfactants.

By using a dispersion stabilizer for suspension polymerization, a vinyl-based compound resin such as a vinyl chloride resin having excellent physical properties such as a uniform particle size, a small amount of coarse particles, high porosity, and a large amount of plasticizer absorption property can be obtained. Hereinafter, the method for polymerizing a vinyl-based compound will be specifically described with reference to examples, but the present invention is not limited thereto.

When producing resin particles of a vinyl-based compound such as vinyl chloride resin particles, the above-mentioned dispersion stabilizer for suspension polymerization is added in an amount of 0.01% by mass to 0.3% by mass, preferably 0.04% by mass to 0.15% by mass, with respect to the vinyl-based compound. The ratio of the vinyl-based compound to water in a mass ratio can be vinyl-based compound: water = 1: 0.9 to 1: 3, preferably vinyl-based compound: water = 1: 1 to 1: 1.5.

The polymerization initiator may be those conventionally used for the polymerization of vinyl-based compounds, which include percarbonate compounds such as diisopropylperoxydicarbonate, di-2-ethylhexyl peroxydicarbonate, diethoxyethylperoxydicarbonate; perester compounds such as t-butylperoxyneodecanoate, $\alpha$-cumylperoxyneodecanoate, t-butylperoxyneodecanoate; peroxides such as acetylcyclohexylsulfonyl peroxide, 2,4,4-trimethylpentyl-2-peroxyphenoxyacetate; azo compounds such as azobis-2,4-dimethylvaleronitrile and azobis (4-methoxy-2,4-dimethylvaleronitrile); and furthermore, potassium persulfate, ammonium persulfate, hydrogen peroxide, and the like. These can be used alone or in combinations.

Further, it is also optional to add a polymerization regulator, a chain transfer agent, a gelation improver, an antistatic agent, a PH regulator and the like, which are appropriately used for the polymerization of vinyl-based compounds.

In carrying out the polymerization of the vinyl-based compound, the charging ratio of each component, the polymerization temperature and the like may be determined according to the conditions conventionally adopted in the suspension polymerization of vinyl-based compound, and there is no particular reason for limitation.

**EXAMPLES**

Hereinafter, the present invention will be described in more detail with reference to Examples.

(Example 1)

1070 g of vinyl acetate, 1130 g of methanol, 120 g of UNILUBE PKA-5013 (polyethylene glycol-polypropylene glycol-allyl ether) (modifying species) manufactured by NOF CORPORATION, and 0.25 g of azobisisobutyronitrile were charged into a polymerization can, and the inside of the system was replaced with nitrogen for 30 minutes. After polymerizing at 60 °C for 9 hours while dropping vinyl acetate at 83 g/hr, the dropping was stopped and polymerization was terminated by cooling. Then, the unreacted monomers were removed by a conventional method, and the obtained modified vinyl acetate polymer was saponified with sodium hydroxide by a conventional method to prepare a modified vinyl alcohol-based polymer. The viscosity average degree of polymerization, the degree of saponification and the modification rate of the obtained modified vinyl alcohol-based polymer were measured by the above-mentioned analytical methods, and it was determined that the viscosity average degree of polymerization was 730, the degree of saponification was 73 mol%, and the modification rate was 0.18 mol%. Further, the results of measuring the weight average molecular weight of the modifying species (hydrophilic unit) according to the method described above is shown in Table 1.

<Evaluation of hydrodynamic radius>

The modified vinyl alcohol-based polymer obtained above was dissolved in a water: methanol = 7: 3 (vol) solution so as to have a concentration of 0.25% by mass, and the hydrodynamic radius was measured using a gel permeation chromatography device (Viscotek TDA305 system manufactured by Malvern Panalytical Ltd) connected to a multi-angle light scattering detector (MALS) and a viscosity detector (VIS).

The measurement conditions are as follows.

Column: OHpack SB-806M x 2 manufactured by Shodex
Mobile phase: $0.1M\text{-}NaNO_3$ solution (water / methanol = 70/30 vol%)
Measurement temperature: 40 °C
Injection volume: 200 μL

<Suspension polymerization of vinyl chloride>

To a volume of 30 L stainless steel autoclave with a stirrer, 8.5 kg of water at 30 °C, 11.0 g of the modified vinyl alcohol-based polymer obtained above as a dispersion stabilizer for suspension polymerization, 3.9 g of t-butylperoxyneodecanoate as a polymerization initiator, and α- 0.9 g of α-cumylperoxyneodecanoate was charged under stirring. After degassing the autoclave in vacuum, 8.5 kg of vinyl chloride was added, and the mixture was polymerized at 57 °C for 4 hours.

<Evaluation of vinyl chloride resin>

The average particle size, particle size distribution, bulk specific gravity and plasticizer absorption amount of the obtained vinyl chloride resin were evaluated by the following methods.

For the measurement of the average particle size and the particle size distribution, the obtained vinyl chloride resin was sieved using sieves of 60 mesh (opening 250 μm), 80 mesh (opening 180 μm), 100 mesh (opening 150 μm), 150 mesh (opening 106 μm), and 200 mesh (opening 75 μm) according to JIS Z8815: 1994. The particle size (D50) with cumulative frequency of 50% (mass basis) was defined as the average particle size, and the difference between the particle size (D80) with cumulative frequency of 80% (mass basis) and the particle size (D20) with cumulative frequency of 20% (mass basis) was defined as the particle size distribution.

The bulk specific gravity was measured in accordance with JIS K6720-2: 1999.

The plasticizer absorption amount was measured according to JIS K7386: 2002.

(Example 2)

A modified vinyl alcohol-based polymer was prepared in the same manner as in Example 1 except that the amount of methanol was changed to 1510 g. The viscosity average degree of polymerization, the degree of saponification and the modification rate of the obtained modified vinyl alcohol-based polymer were measured by the above-mentioned analytical methods, and it was determined that the viscosity average degree of polymerization was 550, the degree of saponification was 73 mol%, and the modification rate was 0.18 mol%. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Example 3)

A modified vinyl alcohol-based polymer was prepared in the same manner as in Example 1 except that the amount of methanol was changed to 1000 g. The viscosity average degree of polymerization, the degree of saponification and the modification rate of the obtained modified vinyl alcohol-based polymer were measured by the above-mentioned analytical methods, and it was determined that the viscosity average degree of polymerization was 890, the degree of saponification was 71 mol%, and the modification rate was 0.18 mol%. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Example 4)

The modified vinyl acetate polymer obtained in the intermediate step of Example 1 was saponified with adjusted amount of sodium hydroxide to prepare a modified vinyl alcohol-based polymer. The viscosity average degree of polymerization, the degree of saponification and the modification rate of the obtained modified vinyl alcohol-based polymer were measured by the above-mentioned analytical methods, and it was determined that the viscosity average degree of polymerization was 730, the degree of saponification was 79 mol%, and the modification rate was 0.18 mol%. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Example 5)

A modified vinyl alcohol-based polymer was prepared in the same manner as in Example 1 except that the modifying species (a hydrophilic unit) was changed to ADEKA REASOAP ER-40 (polyoxyethylene-alkylallyl ether) manufactured by ADEKA CORPORATION, and the addition amount was 122 g. The viscosity average degree of polymerization, the degree of saponification and the modification rate of the obtained modified vinyl alcohol-based polymer were measured by the above-mentioned analytical methods, and it was determined that the viscosity average degree of polymerization was 700, the degree of saponification was 73 mol%, and the modification rate was 0.17 mol%. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Example 6)

2200 g of vinyl acetate, 790 g of methanol, and 77 g of UNIOX PKA-5005 (polyethylene glycol-allyl ether) (modifying species) manufactured by NOF CORPORATION were charged into a polymerization can, and the inside of the system was replaced with nitrogen for 30 minutes. After polymerizing at 60 °C for 9 hours, the polymerization was terminated by cooling. Then, the unreacted monomers were removed by a conventional method, and the obtained modified vinyl acetate polymer was saponified with sodium hydroxide by a conventional method to prepare a modified vinyl alcohol-based polymer. The viscosity average degree of polymerization, the degree of saponification and the modification rate of the obtained modified vinyl alcohol-based polymer were measured by the above-mentioned analytical methods, and it was determined that the viscosity average degree of polymerization was 1350, the degree of saponification was 73 mol%, and the modification rate was 0.12 mol%. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Example 7)

1850 g of vinyl acetate, 750 g of methanol, and 6.4 g of a 50% methanol solution of AQUALON RN-50 (polyoxyethylene nonylpropenylphenyl ether) (modifying species) manufactured by DKS Co. Ltd. were charged into a polymerization can, and the inside of the system was replaced with nitrogen for 30 minutes. After polymerizing at 60 °C for 9 hours while dropping 29 g of a 50% methanol solution of AQUALON RN-50, the dropping was stopped and polymerization was terminated by cooling. Then, the unreacted monomers were removed by a conventional method, and the obtained modified vinyl acetate polymer was saponified with sodium hydroxide by a conventional method to prepare a modified vinyl alcohol-based polymer. The viscosity average degree of polymerization, the degree of saponification and the modification rate of the obtained modified vinyl alcohol-based polymer were measured by the above-mentioned analytical methods, and it was determined that the viscosity average degree of polymerization was 780, the degree of saponification was 72 mol%, and the modification rate was 0.25 mol%. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Comparative Example 1)

1700 g of vinyl acetate, 1133 g of methanol, and 26.7 g of LATEMUL PD-450 (polyoxyalkylene alkenyl ether) (modifying species) provided by Kao Corporation as a modifying species were charged into a polymerization can, and the inside of the system was replaced with nitrogen for 30 minutes. 0.25 g of azobisisobutyronitrile was charged into a polymerization can, and after polymerizing at 60 °C for 9 hours, polymerization was terminated by cooling. Then, a modified vinyl alcohol-based polymer was prepared in the same manner as in Example 1. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Comparative Example 2)

2400 g of vinyl acetate and 340 g of methanol were charged into a polymerization can, and the inside of the system was replaced with nitrogen for 30 minutes. 0.77 g of azobisisobutyronitrile was charged into a polymerization can, and after polymerizing at 60 °C for 4 hours, polymerization was terminated by cooling. Then, a modified vinyl alcohol-based polymer was prepared in the same manner as in Example 1. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Comparative Example 3)

1650 g of vinyl acetate, 1980 g of water, 1.4 g of polyvinyl alcohol as a dispersant, 21.5 g of modified normal butyraldehyde (modifying species), and 0.4 g of azobisisobutyronitrile were charged into a polymerization can, and heated and polymerized at 60 °C for 6 hours. Then, the unreacted monomers were removed by a conventional method, and the obtained polymer was dissolved in methanol, and a modified vinyl alcohol-based polymer was prepared by saponification with sodium hydroxide by a conventional method. Suspension polymerization of vinyl chloride was carried out under the same conditions as in Example 1 except that the obtained modified vinyl alcohol-based polymer was used as a dispersion stabilizer for suspension polymerization, and evaluation was conducted.

(Comparative Example 4)

2200 g of vinyl acetate, 790 g of methanol, and 77 g of UNIOX PKA-5005 (polyethylene glycol-allyl ether) (modifying species) manufactured by NOF CORPORATION were charged in a polymerized can, and the inside of the system was replaced with nitrogen for 30 minutes. Then, the unreacted monomers were removed by a conventional method, and the obtained polymer was saponified with sodium hydroxide by a conventional method to prepare a modified vinyl alcohol-based polymer. Suspension polymerization of vinyl chloride was carried out under the same conditions as in Example 1 except that the obtained modified vinyl alcohol-based polymer was used as a dispersion stabilizer for suspension polymerization, and evaluation was conducted.

The results are shown in Tables 1 to 3. It can be seen that when the modified vinyl alcohol-based polymers according to Examples 1 to 7 having a hydrodynamic radius (Rh) satisfying the formula (1) are used, coarse particles are less likely to be formed in the vinyl chloride resin, and particles with high particle size uniformity were obtained. In addition, polymer particles having a large bulk specific gravity (porosity) and excellent plasticizer absorbability were obtained.

Table 1

| | | Example 1 | Example 2 | Example 3 | Example 4 |
|---|---|---|---|---|---|
| Polyvinyl alcohol used | Modifying species (hydrophilic unit) | Polyethylene glycol polypropylene glycol allyl ether | Polyethylene glycol polypropylene glycol allyl ether | Polyethylene glycol polypropylene glycol allyl ether | Polyethylene glycol polypropylene glycol allyl ether |
| | Modification rate (mol%) | 0.18 | 0.18 | 0.18 | 0.18 |
| | Weight average molecularweight of hydrophilic unit | 880 | 880 | 880 | 880 |
| | Viscosity average degree of polymerization x | 730 | 550 | 890 | 730 |
| | Degree of saponification (mol%) | 73 | 73 | 71 | 79 |
| | Hydrodynamic radius Rh (nm) | 7.3 | 6.2 | 8.2 | 7.1 |
| | The value on left side of formula (1) ($0.186x^{0.542} \times 1.30$) | 8.6 | 7.4 | 9.6 | 8.6 |
| | The value on right side of formula (1) ($0.186x^{0.542} \times 1.06$) | 7.0 | 6.0 | 7.8 | 7.0 |
| Physical properties of obtained vinyl chloride resin | Average particle size ($\mu$m) | 130 | 139 | 124 | 138 |
| | Particle size distribution (D80 - D20) ($\mu$m) | 51 | 59 | 53 | 57 |
| | Bulk specific gravity (g/mL) | 0.41 | 0.40 | 0.44 | 0.45 |
| | Plasticizer absorption amount (phr) | 30 | 32 | 28 | 27 |

Table 2

| | | Example 5 | Example 6 | Example 7 |
|---|---|---|---|---|
| Polyvinyl alcohol used | Modifying species (hydrophilic unit) | Polyoxyethylene alkyl allyl ether | Polyethylene glycol allyl ether | Polyoxyethylene nonylpropenylphenyl ether |
| | Modification rate (mol%) | 0.17 | 0.12 | 0.25 |
| | Weight average molecular weight of hydrophilic unit | 1760 | 1320 | 2200 |
| | Viscosity average degree of polymerization x | 700 | 1350 | 780 |
| | Degree of saponification (mol%) | 73 | 73 | 72 |
| | Hydrodynamic radius Rh (nm) | 7.4 | 9.8 | 7.7 |
| | The value on left side of formula (1) ($0.186x^{0.542} \times 1.30$) | 8.4 | 12.0 | 8.9 |
| | The value on right side of formula (1) ($0.186x^{0.542} \times 1.06$) | 6.9 | 9.8 | 7.3 |
| Physical properties of obtained vinyl chloride resin | Average particle size ($\mu$m) | 123 | 150 | 121 |
| | Particle size distribution (D80 - D20) ($\mu$m) | 48 | 60 | 50 |
| | Bulk specific gravity (g/mL) | 0.44 | 0.42 | 0.43 |
| | Plasticizer absorption amount (phr) | 28 | 29 | 29 |

Table 3

| | | Comparative Example 1 | Comparative Example 2 | Comparative Example 3 | Comparative Example 4 |
|---|---|---|---|---|---|
| Polyvinyl alcohol used | Modifying species (hydrophilic unit) | Polynxyalkylene alkanyl ether | None | Normal butyraldehyde | Polyethylene glycol allyl ether |
| | Modification rate (mol%) | 0.03 | - | 0.20 | 0.18 |
| | Weight average molecular weight of hydrophilic unit | 2200 | - | - | 154 |
| | Viscosity average degree of polymerization x | 700 | 2500 | 600 | 700 |
| | Degree of saponification (mol%) | 72 | 80 | 72 | 73 |
| | Hydrodynamic radius Rh (nm) | 6.7 | 13.6 | 6.1 | 6.8 |
| | The value on left side of formula (1) ($0.186x^{0.542} \times 1.30$) | 8.4 | 16.8 | 7.7 | 8.4 |
| | The value on right side of formula (1) ($0.186x^{0.542} \times 1.06$) | 6.9 | 13.7 | 6.3 | 6.9 |
| Physical properties of obtained vinyl chloride resin | Average particle size ($\mu$m) | 200 | 160 | 175 | 188 |
| | Particle size distribution (D80 - D20) ($\mu$m) | 66 | 96 | 82 | 75 |
| | Bulk specific gravity (g/mL) | 0.44 | 0.54 | 0.44 | 0.44 |
| | Plasticizer absorption amount (phr) | 28 | 14 | 28 | 27 |

**Claims**

1. A modified vinyl alcohol-based polymer having a hydrodynamic radius (Rh) (unit: nm) satisfying a formula (1) with respect to a viscosity average degree of polymerization x.

$$0.186x^{0.542} \times 1.30 \geq Rh \geq 0.186x^{0.542} \times 1.06 \ \ (1)$$

2. The modified vinyl alcohol-based polymer according to claim 1, wherein a degree of saponification of 65 mol% or more and 99.9 mol% or less.

3. The modified vinyl alcohol-based polymer according to claim 1 or 2, comprising a hydrophilic unit in a side chain.

4. The modified vinyl alcohol-based polymer according to claim 3, wherein the hydrophilic unit is a polyethylene oxide group.

5. A dispersion stabilizer for suspension polymerization comprising the modified vinyl alcohol-based polymer according to any one of claims 1 to 4.

6. A method for polymerizing a vinyl-based compound, comprising dispersing a vinyl-based compound, or a mixture of a vinyl-based compound and a monomer copolymerizable therewith in water, with the dispersion stabilizer for suspension polymerization according to claim 5, to perform suspension polymerization.

FIG. 1

## INTERNATIONAL SEARCH REPORT

| International application No. |
|---|
| PCT/JP2021/014828 |

### A. CLASSIFICATION OF SUBJECT MATTER
C08F 8/12(2006.01)i; C08F 290/06(2006.01)i; C08F 2/20(2006.01)i
FI: C08F8/12; C08F290/06; C08F2/20

According to International Patent Classification (IPC) or to both national classification and IPC

### B. FIELDS SEARCHED

Minimum documentation searched (classification system followed by classification symbols)
C08F8/12; C08F290/06; C08F2/20

| Documentation searched other than minimum documentation to the extent that such documents are included in the fields searched | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2019/156006 A1 (DENKA COMPANY LIMITED) 15 August 2019 (2019-08-15) claims, examples | 1–5 |
| A | WO 2013/125678 A1 (KURARAY CO., LTD.) 29 August 2013 (2013-08-29) | 1–5 |
| A | JP 2001-40019 A (THE NIPPON SYNTHETIC CHEMICAL INDUSTRY CO., LTD.) 13 February 2001 (2001-02-13) | 1–5 |
| A | JP 2001-233904 A (THE NIPPON SYNTHETIC CHEMICAL INDUSTRY CO., LTD.) 28 August 2001 (2001-08-28) | 1–5 |

☐ Further documents are listed in the continuation of Box C.      ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 June 2021 (09.06.2021) | 22 June 2021 (22.06.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

INTERNATIONAL SEARCH REPORT

Information on patent family members

International application No.

PCT/JP2021/014828

| Patent Documents referred in the Report | Publication Date | Patent Family | Publication Date |
|---|---|---|---|
| WO 2019/156006 A1 | 15 Aug. 2019 | EP 3686224 A1 claims, examples CN 111295401 A TW 201940530 A | |
| WO 2013/125678 A1 | 29 Aug. 2013 | (Family: none) | |
| JP 2001-40019 A | 13 Feb. 2001 | (Family: none) | |
| JP 2001-233904 A | 28 Aug. 2001 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08208724 B
- WO 2010113569 A
- WO 2013115239 A